# EUROPÄISCHE PATENTANMELDUNG

(11) **EP 3 739 402 A1**
(43) Veröffentlichungstag der Anmeldung: **18.11.2020**
(21) Anmeldenummer: 19175204.7
(22) Anmeldetag: 17.05.2019
(51) Int. Cl.: G05B 19/042

(54) **VERFAHREN, VORRICHTUNG UND COMPUTERPROGRAMMPRODUKT ZUM BETREIBEN VON BETRIEBSEINHEITEN**

(71) Anmelder: Lang, Ina, 8044 Zürich (CH); Krauss, Wolfgang, 69117 Heidelberg (DE); Benoufa, Robert, 69168 Wiesloch (DE); Kowa, Herbert, 69151 Neckargemünd (DE)
(72) Erfinder: Lang, Ina, 8044 Zürich (CH); Krauss, Wolfgang, 69117 Heidelberg (DE); Benoufa, Robert, 69168 Wiesloch (DE); Kowa, Herbert, 69151 Neckargemünd (DE)
(74) Vertreter: Patent- und Rechtsanwälte Ullrich & Naumann

(57) **Zusammenfassung**

Im Hinblick auf einen sicheren Betrieb von Betriebseinheiten unter umfassender Berücksichtigung klimaschädlicher Emissionen mit konstruktiv einfachen Mitteln ist ein Verfahren zum Betreiben von Betriebseinheiten, insbesondere in industriellen Prozessen, bereitgestellt, wobei mindestens eine Betriebseinheit zum Erreichen eines definierbaren Betriebs- oder Produktionsziels mittels einer Steuereinrichtung gesteuert wird, wobei ein oder mehrere für das Betreiben der mindestens einen Betriebseinheit relevante Parameter in einer Funktionseinheit gemessen und/oder erfasst und/oder hinterlegt wird oder werden und wobei die CO2-Relevanz des Parameters oder der Parameter und/oder die durch den oder die Parameter während des Betriebs der mindestens einen Betriebseinheit verursachte CO2-Emission mittels einer mit der Funktionseinheit zusammenwirkenden Ausgabeeinrichtung angezeigt oder ausgegeben wird oder werden. Des Weiteren ist eine entsprechende Vorrichtung sowie ein Computerprogrammprodukt mit Programmabschnitten zur Durchführung des Verfahrens angegeben.

## Beschreibung

Die Erfindung betrifft ein Verfahren zum Betreiben von Betriebseinheiten, insbesondere in industriellen Prozessen, wobei mindestens eine Betriebseinheit zum Erreichen eines definierbaren Betriebs- oder Produktionsziels mittels einer Steuereinrichtung gesteuert wird und wobei ein oder mehrere für das Betreiben der mindestens einen Betriebseinheit relevante Parameter in einer Funktionseinheit gemessen und/oder erfasst und/oder hinterlegt wird oder werden.

Des Weiteren betrifft die vorliegende Erfindung eine Vorrichtung zur Durchführung des Verfahrens zum Betreiben von Betriebseinheiten sowie ein Computerprogrammprodukt mit Programmabschnitten zur Durchführung des Verfahrens zum Betreiben von Betriebseinheiten.

Aus der Praxis sind unterschiedliche Verfahren zum Betreiben von Betriebseinheiten, insbesondere in industriellen Prozessen, bekannt, wobei mindestens eine Betriebseinheit zum Erreichen eines definierbaren Betriebs- oder Produktionsziels mittels einer Steuereinrichtung gesteuert wird. Ein derartiges Betriebs- oder Produktionsziel kann die Herstellung eines Produkts unterschiedlicher Art sein. Dabei können unterschiedliche Betriebseinheiten unterschiedliche Herstellungsschritte bei der Produktherstellung durchführen. Eine Betriebseinheit kann beispielsweise durch eine einzelne Maschine oder durch eine Maschinenanordnung aus mehreren Maschinen gebildet sein. Dabei ist es bekannt, Energieströme hinsichtlich Betriebseinheiten mittels einer übergeordneten Datenerfassung zu messen. Häufig werden hierzu komplexe Infrastrukturen an Messeinrichtungen zur Verarbeitung und Analyse von Energieströmen realisiert. Entsprechende Kennzahlen und Messwerte werden dargestellt. Einfache Datenabfragen hinsichtlich beispielsweise einer Produktionshistorie und zugehörigen Verbräuchen an Energie dienen dem erforderlichen Energiemanagement auch in komplexen Infrastrukturen und Prozessen. Die zum Betreiben von Betriebseinheiten erforderliche Energie, beispielsweise elektrischer Strom, bildet einen Parameter, der in einer Funktionseinheit, beispielsweise ein geeignetes Messgerät, gemessen und gegebenenfalls gespeichert werden kann.

Aus dem Stand der Technik ist es weiterhin bekannt, Regelkreise zu verwenden, um einen einzigen Parameter nach festgelegten Kriterien zu optimieren, wobei auch Kaskaden aus mehreren Regelkreisen je nach Komplexität einer vorliegenden Anordnung aus Betriebseinheiten zum Einsatz kommen können. Dabei kann ein Regelungsprozess im Hinblick auf einen optimierten oder minimierten Einsatz von Energie arbeiten.

Bekannte Verfahren zum Energiemanagement und damit auch zum Betreiben von Betriebseinheiten zielen ausschließlich auf die Messung und Darstellung von Energieströmen ab. Hieraus können sich Einsparmöglichkeiten im Energiebereich ergeben.

In der heutigen Zeit gehen die Anforderungen beim insbesondere industriellen Betrieb von Betriebseinheiten über eine energetisch optimierte Betriebsweise hinaus, wobei es bei einem Betrieb von Betriebseinheiten nicht nur auf den reinen Energieverbrauch, sondern in zunehmendem Maße auch auf eine Bewertung eines derartigen Betriebs im Hinblick auf seine CO2-Emissionen ankommt, wobei nicht nur lediglich die durch das Betreiben der Betriebseinheiten verursachten CO2-Emissionen, sondern auch die beispielsweise bei der Herstellung von durch die Betriebseinheiten zu verarbeitenden Produkten bereits zuvor verursachten CO2-Emissionen zu berücksichtigen sind.

Der vorliegenden Erfindung liegt daher die Aufgabe zugrunde, ein Verfahren, eine Vorrichtung sowie ein Computerprogrammprodukt der eingangs genannten Art anzugeben, wonach ein sicherer Betrieb von Betriebseinheiten unter umfassender Berücksichtigung klimaschädlicher Emissionen mit konstruktiv einfachen Mitteln ermöglicht ist.

Erfindungsgemäß wird die voranstehende Aufgabe durch ein Verfahren mit den Merkmalen des Anspruchs 1, durch eine Vorrichtung mit den Merkmalen des Anspruchs 13 sowie durch ein Computerprogrammprodukt mit den Merkmalen des Anspruchs 14 gelöst. Danach wird oder werden die CO2-Relevanz des Parameters oder der Parameter und/oder die durch den oder die Parameter während des Betriebs der mindestens einen Betriebseinheit verursachte CO2-Emission mittels einer mit der Funktionseinheit zusammenwirkenden Ausgabeeinrichtung angezeigt oder ausgegeben.

In erfindungsgemäßer Weise ist erkannt worden, dass heutigen Anforderungen an die Berücksichtigung klimaschädlicher Auswirkungen des Betreibens von Betriebseinheiten dadurch Rechnung getragen werden kann, dass für das Betreiben von Betriebseinheiten relevante Parameter in möglichst umfassender Weise in die Betrachtung einbezogen werden, wobei weiter erfindungsgemäß die CO2-Relvanz des Parameters oder der Parameter und/oder die durch den oder die Parameter während des Betriebs der mindestens einen Betriebseinheit verursachte CO2-Emission mittels einer mit der Funktionseinheit zusammenwirkenden Ausgabeeinrichtung angezeigt oder ausgegeben wird oder werden. Ein Parameter wie beispielsweise elektrischer Strom wird dabei nicht hinsichtlich seiner Kosten, sondern hinsichtlich seiner CO2-Relevanz angezeigt oder ausgegeben. Dabei können beispielsweise die für die Erzeugung des elektrischen Stroms erforderlichen Prozesse hinsichtlich deren CO2-Relevanz mit einbezogen werden, um eine möglichst umfassende Berücksichtigung einer CO2-Emission im Rahmen des erfindungsgemäßen Verfahrens zum Betreiben von Betriebseinheiten abzubilden. In gleicher Weise kann ein Parameter beispielsweise auch durch einen Rohstoff gebildet sein, der bei der Herstellung eines Produkts von einer Betriebseinheit verarbeitet wird. Dabei wird auch die für die Herstellung des Rohstoffs erforderliche CO2-Emission in die Anzeige oder Ausgabe der CO2-Relevanz oder CO2-Emission miteinbezogen. Eine Anzeige der CO2-Relevanz und/oder CO2-Emission kann über einen Bildschirm der Ausgabeeinrichtung erfolgen. Eine diesbezügliche Ausgabe kann über eine geeignete Schnittstelle der Ausgabeeinrichtung erfolgen, wobei die CO2-Relevanz und/oder CO2-Emission an weitere Verarbeitungseinrichtungen übermittelt werden kann. Die Anzeige oder Ausgabe der CO2-Relevanz oder CO2-Emission ermöglicht eine umfassende Analyse des Betriebs von Betriebseinheiten und bietet die Basis für eine geeignete Regelung und/oder Steuerung unter Berücksichtigung von beispielsweise CO2-Emissionsgrenzwerten.

Folglich ist mit dem erfindungsgemäßen Verfahren sowie mit der erfindungsgemäßen Vorrichtung und dem erfindungsgemäßen Computerprogrammprodukt ein sicherer Betrieb von Betriebseinheiten unter umfassender Berücksichtigung klimaschädlicher Emissionen mit konstruktiv einfachen Mitteln ermöglicht.

Im Hinblick auf eine besonders aussagekräftige und sichere Berücksichtigung klimaschädlicher Emissionen kann der oder können die Parameter in Echtzeit gemessen und/oder erfasst und/oder hinterlegt werden. Dies ermöglicht eine ständig aktuelle Anzeige oder Ausgabe der CO2-Relevanz und/oder CO2-Emission. Dabei kann eine Datenablage mit Zeitstempel realisiert werden, die eine direkte Zuordnung der CO2-Emissionen oder des CO2-Verbrauchs zu hergestellten Produkten ermöglicht. Hierdurch kann eine CO2-Relevanz von Produkten nachgewiesen und dokumentiert werden. Eine geeignete Validierung kann in einem weiteren Verfahrensschritt ein Ranking der Produkte ermöglichen, wobei die Produkte mit Chargennummern in Übereinstimmung gebracht werden können.

Alternativ oder zusätzlich zu der Messung und/oder Erfassung und/oder Hinterlegung des oder der Parameter in Echtzeit kann die CO2-Relevanz und/oder die CO2-Emission in Echtzeit angezeigt oder ausgegeben werden. Dies bildet die Basis für eine schnelle und sichere Reaktion bei der Regelung und/oder Steuerung von Betriebseinheiten auf Basis der angezeigten oder ausgegeben CO2-Relevanz und/oder CO2-Emission.

Je nach Erfordernis und/oder Anwendungsfall kann die Funktionseinheit der Steuereinrichtung zugeordnet, in die Steuereinrichtung integriert oder durch Bereitstellung eines einzelnen Geräts durch die Steuereinrichtung selbst gebildet sein. Durch eine Integration der Funktionseinheit in die Steuereinrichtung ist eine besonders kompakte Ausgestaltung eines durch die Funktionseinheit und die Steuereinrichtung gebildeten Steuersystems ermöglicht.

Alternativ oder zusätzlich hierzu kann die Ausgabeeinrichtung der Funktionseinheit zugeordnet, in die Funktionseinheit integriert oder durch die Funktionseinheit gebildet sein. Auch bei diesen Realisierungsmöglichkeiten kann auf den jeweiligen Anwendungsfall und auf individuelle Erfordernisse einer individuellen Konstellation von Betriebseinheiten abgestellt werden. Ganz grundsätzlich kann die Ausgabeeinrichtung durch einen Bildschirm oder eine Schnittstelle zu weiteren geeigneten Vorrichtungen realisiert sein. Die Steuereinrichtung und/oder die Funktionseinheit kann durch einen in geeigneter Weise ausgebildeten Rechner realisiert sein.

Im Hinblick auf die zu messenden und/oder zu erfassenden und/oder zu hinterlegenden Parameter besteht letztendlich keine Einschränkung, wobei in besonders vorteilhafter Weise darauf zu achten ist, dass die Auswahl möglichst umfassend ist und damit möglichst viele oder gar sämtliche relevanten CO2-Verursacher oder CO2-Emittenten berücksichtigt werden. Dabei kann der oder können die Parameter unter den folgenden Parametern ausgewählt werden: elektrischer Strom, Brennstoff oder Brennstoffe, Wasser, Abwasser, Rohstoff oder Rohstoffe, Halbzeug oder Halbzeuge, Fertigprodukt oder Fertigprodukte, Hilfsprodukt oder Hilfsprodukte, Transport oder Infrastruktur. Bei der genannten beispielhaften und nicht abschließenden Aufzählung ist erkennbar, dass es sich bei den Parametern nicht nur um für den direkten Betrieb einer Betriebseinheit relevante Parameter handelt, wie beispielsweise elektrischer Strom, Brennstoff oder Brennstoffe. Vielmehr wird im Rahmen der relevanten Parameter auch berücksichtigt, dass beispielsweise Rohstoffe oder Halbzeuge oder Fertigprodukte oder Hilfsprodukte, die von einer Betriebseinheit verarbeitet oder weiterverarbeitet werden, bereits eine "CO2-Vergangenheit" oder "CO2-Zukunft" aufweisen. Das heißt, dass bei deren Gewinnung oder Herstellung noch vor ihrer Verarbeitung in einer Betriebseinheit eine CO2-Emission erfolgt ist oder auch nach deren Verarbeitung eine weitere CO2-Relevanz, beispielsweise durch eine in der Zukunft liegende Entsorgung eines durch die Betriebseinheit oder die Betriebseinheiten hergestellten Produkts, zu befürchten ist. Weiterhin kann ein Transport von beispielsweise Rohstoffen, Halbzeugen, Fertigprodukten oder Hilfsprodukten zu der Betriebseinheit oder zu den Betriebseinheiten berücksichtigt werden, wobei hier beispielsweise CO2-Emissionen von Transportfahrzeugen berücksichtigt werden können. Auch kann es von Bedeutung sein, die für die Bereitstellung der durch die Betriebseinheiten zu verarbeitenden Komponenten, beispielsweise Rohstoffe, Halbzeuge, Fertigprodukte oder Hilfsprodukte, erforderliche gesamte Infrastruktur, beispielsweise auch vorherige Lagerhaltungen, zu berücksichtigen. Alle derartigen zuvor genannten Parameter können bei dem erfindungsgemäßen Verfahren berücksichtigt und so ein besonders umfassendes Bild hinsichtlich klimaschädlicher Emissionen bei einem Verfahren zum Betreiben von Betriebseinheiten ermöglichen.

In besonders einfacher Weise kann ein Hinterlegen der CO2-Relevanz eines Parameters in der Funktionseinheit auf der Basis einer Information aus einer internen oder externen Datenbank und/oder von Drittsystemen erfolgen. Relevante Parameter, die hinsichtlich ihrer Verarbeitung und/oder ihres Verbrauchs von Betriebsstoffen oder Strom nicht direkt durch die Funktionseinheit gemessen und/oder erfasst werden können, können hinsichtlich ihrer CO2-Relevanz und/oder CO2-Emission in der Funktionseinheit hinterlegt werden, wobei sich dies beispielsweise auf der Betriebseinheit zugeführte Rohstoffe, Halbzeuge, Fertigprodukte oder Hilfsprodukte beziehen kann, die üblicherweise bereits eine "CO2-Vergangenheit" aufweisen. Beispielsweise ist es bekannt, dass die CO2-Relevanz von chemischen Substanzen aus Datenbanken erhalten werden kann. Somit ist eine umfassende Berücksichtigung der CO2-Relevanz derartiger Parameter ermöglicht.

In vorteilhafter Weise kann eine Regelung und/oder Steuerung der mindestens einen Betriebseinheit oder von Aggregaten und/oder Anlagen der mindestens einen Betriebseinheit unter Berücksichtigung der CO2-Relevanz des Parameters oder der Parameter erfolgen. Damit kann beispielsweise die Regelung und/oder Steuerung im Hinblick auf eine Optimierung der Auswahl des Parameters oder der Parameter bezüglich deren jeweiliger CO2-Relevanz erfolgen. Beispielsweise kann unter Berücksichtigung einer unterschiedlichen CO2-Relevanz zweier unterschiedlicher aber für das Erreichen des Betriebs- oder Produktionsziels im Wesentlichen gleichwertiger Rohstoffe derjenige Rohstoff ausgewählt werden, der die geringere CO2-Relevanz aufweist. Im Fall von beispielsweise mehreren zu verwendenden unterschiedlichen Rohstoffen kann die Rohstoffkombination verwendet werden, die insgesamt die geringste CO2-Relevanz aufweist. Ein derartiger Optimierungsprozess ist in gleicher Weise für sämtliche in dieser Beschreibung genannten und auch mögliche weitere hier nicht genannten Parameter möglich.

In weiter vorteilhafter Weise kann eine Regelung und/oder Steuerung der mindestens einen Betriebseinheit oder von Aggregaten und/oder Anlagen der mindestens einen Betriebseinheit unter Berücksichtigung der durch den oder die Parameter während des Betriebs der mindestens einen Betriebseinheit verursachten CO2-Emission erfolgen. Ähnlich wie bei der Auswahl geeigneter Parameter kann die Regelung und/oder Steuerung alternativ oder zusätzlich die durch den oder die Parameter während des Betriebs der mindestens einen Betriebseinheit verursachten CO2-Emissionen berücksichtigen, um beispielsweise eine Regelung und/oder Steuerung im Hinblick auf eine Optimierung oder Minimierung der durch den oder die Parameter während des Betriebs der mindestens einen Betriebseinheit verursachten CO2-Emission durchzuführen. Bei Vorliegen von beispielsweise zwei für das Erreichen des Betriebs- oder Produktionsziels im Wesentlichen gleichwertiger Parameter kann derjenige Parameter ausgewählt werden, der die geringste CO2-Emission zur Folge hat.

In weiter vorteilhafter Weise kann mindestens eine technische und/oder kaufmännische Optimierungsmöglichkeit für den Betrieb und/oder eine Regelung und/oder Steuerung der mindestens einen Betriebseinheit oder von Aggregaten und/oder Anlagen der mindestens einen Betriebseinheit auf Basis der hinsichtlich des Parameters oder der Parameter angezeigten oder ausgegebenen CO2-Relevanz und/oder CO2-Emission angezeigt werden, wobei diese mindestens eine technische und/oder kaufmännische Optimierungsmöglichkeit vorzugsweise als Basis für eine Optimierung des Betriebs und/oder der Regelung und/oder Steuerung verwendet wird. Eine derartige technische und/oder kaufmännische Optimierungsmöglichkeit kann auch zur technischen und/oder kaufmännischen Optimierung der gesamten Infrastruktur aus Betriebseinheiten verwendet werden. Dabei kann eine Abweichung zu einem optimalen Zustand dargestellt werden.

Ein erfindungsgemäßes Computerprogrammprodukt weist Programmabschnitte zur Durchführung des Verfahrens zum Betreiben von Betriebseinheiten auf, wobei sich diese Programmabschnitte auf das Steuern der mindestens einen Betriebseinheit mittels einer Steuereinrichtung, das Messen und/oder Erfassen und/oder Hinterlegen relevanter Parameter in einer Funktionseinheit und auf die Anzeige oder Ausgabe der CO2-Relevanz und/oder der verursachten CO2-Emssionen mittels der Funktionseinheit beziehen. Weitere Programmabschnitte hinsichtlich der in den Unteransprüchen genannten Verfahrensmerkmale können in geeigneter Weise hinzukommen.

Eine grundlegende Zielstellung der vorliegenden Erfindung besteht in einer optimalen und maximal möglichen CO2-Einsparung, um vorgegebene Klimaziele zu erzielen. Ein Ausführungsbeispiel der vorliegenden Erfindung kann Einsparungen unverzüglich in Echtzeit und als "lernendes System" beispielsweise als CO2-Äquivalent darstellen. Bei einer vorteilhaften Ausgestaltung kann eine CO2-orientierte Steuerung des Betriebs von Betriebseinheiten bis hin zu einer Bewertung der CO2-Belastung, die sich beispielsweise aus den Betriebsmitteln/Rohstoffen des jeweiligen Betriebs ergibt, möglich sein. Das Verfahren und ein entsprechendes System basieren dabei auf individuellen Rahmendaten einer jeweiligen Betriebsanordnung.

Mit der vorliegenden Erfindung kann ein CO2-basiertes Betriebsmanagementsystem bereitgestellt werden, um zukünftigen gesetzlichen Änderungen und/oder Verschärfungen bezüglich der Nachweispflicht zur CO2-Einsparung Rechnung zu tragen und konkrete Maßnahmen zu deren Umsetzung aufzuzeigen.

Bei einer weiteren bevorzugten Ausführungsform des erfindungsgemäßen Verfahrens wird bei gegebenen, beispielsweise komplexen Infrastrukturen eine übergeordnete Datenerfassung, Verarbeitung und Analyse implementiert, die als Ergebnis nicht nur eine einfache Datenabfrage, beispielsweise die Darstellung einer Historie, von Verbräuchen etc., ermöglicht, sondern selbstständig Parameter generiert, die aus spezifischen Algorithmen abgleitet werden können. Als oberste Hierarchie und priorisierte Größe kann das CO2-Äquivalent als Istwert in Echtzeit ausgegeben werden. Als weitere Größen können Werte ausgegeben werden, die dazu dienen, die gegebene Infrastruktur hinsichtlich technischer und/oder kaufmännischer Optima zu visualisieren, so dass Abweichungen zu einem optimalen Zustand ersichtlich sind. Diese Größen können auch zur Regelung und/oder Steuerung der mindestens einen Betriebseinheit oder von Aggregaten und/oder Anlagen der mindestens einen Betriebseinheit oder zur Eingriffnahme durch Personal herangezogen werden.

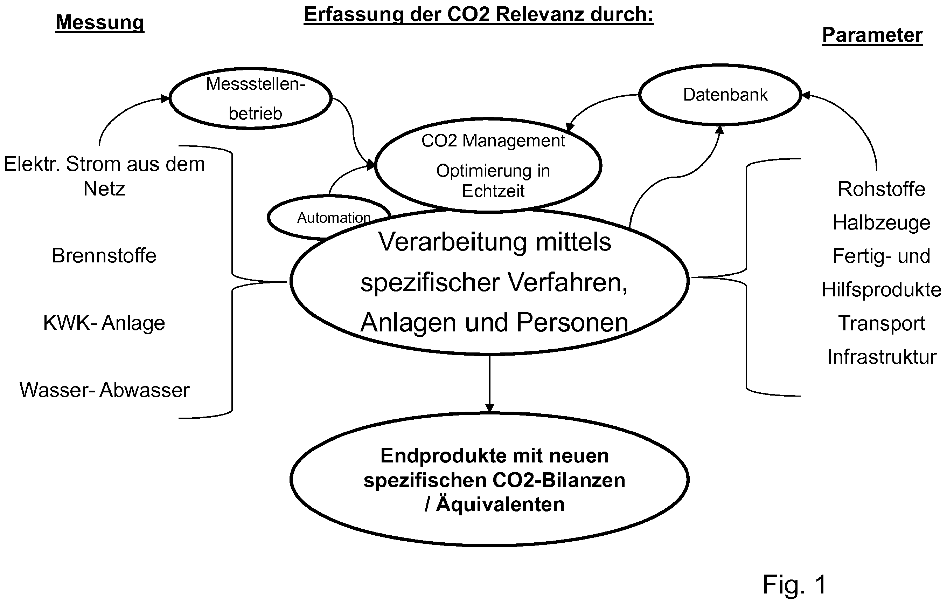

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der erfindungsgemäßen Lehre anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigt
- Fig. 1: in einer schematischen Darstellung ein Ausführungsbeispiel eines erfindungsgemäßen Verfahrens zum Betreiben von Betriebseinheiten.

Fig. 1 zeigt in einer schematischen Darstellung in einem Diagramm ein Ausführungsbeispiel eines erfindungsgemäßen Verfahrens zum Betreiben von Betriebseinheiten, wie es beispielsweise in industriellen Prozessen zum Einsatz kommen kann. Dabei sind beispielsweise gemessene Parameter von Bedeutung, beispielsweise elektrischer Strom aus dem Netz, eingesetzte Brennstoffe, Daten von einer KWK-Anlage (Kraft-Wärme-Kopplung) oder Wasser/Abwasser-Daten. Hierzu existieren geeignete Messstellen. Andererseits werden Parameter wie Rohstoffe, Halbzeuge, Fertig- und Hilfsprodukte, Transport und Infrastruktur berücksichtigt, wobei entsprechende CO2-Relevanz-Daten aus geeigneten Datenbanken erhalten werden können. Beispielsweise sind derartige Daten für chemische Produkte wie beispielsweise Methan bekannt.

Auf Basis der gemessenen, erfassten und hinterlegten Parameter kann ein CO2-Management mit einer Optimierung in Echtzeit erfolgen. Hierbei kann eine Automation das Verfahren unterstützen. Der Betrieb von Betriebseinheiten erfolgt mittels für das Erreichen des Betriebs- oder Produktionsziels erforderlichen Verfahren, Anlagen und Personen. Im Ergebnis ergeben sich nach geeigneter Nutzung angezeigter oder ausgegebener CO2-Relevanz-Daten und/oder CO2-Emissions-Daten Endprodukte mit gegebenenfalls neuen und überarbeiteten spezifischen CO2-Bilanzen/Äquivalenten.

Mit der vorliegenden Erfindung wird eine im Wesentlichen selbstoptimierende Datenvernetzung sowohl nicht standardisierter als auch standardisierter Regelkreise möglich, wobei eine Datenauswertung sowohl interner als auch externer Datenbanken erfolgen kann. Im Ergebnis können betriebsinterne Anlagen und Verfahren zum Betreiben von Betriebseinheiten gesteuert werden, wobei gesetzliche Regelwerke und Normenvorgaben einbezogen werden können.

Damit ist eine umfassende Betrachtung von im Wesentlichen allen CO2-relevanten Parametern möglich, soweit deren Erfassung und Zugänglichkeit in einem spezifischen Fall realisierbar sind. Eine Erfassung von Daten in Echtzeit ist möglich, um einen Nachweis der Einhaltung gesetzlicher Normen und Regelwerke bereitzustellen. Das erfindungsgemäße Verfahren bietet nicht nur ein Steuerungsinstrument zur Optimierung betriebsinterner Abläufe, sondern es ist auch die Erstellung von Auswahlkriterien für CO2-minimierte Fertigungsprozesse möglich.

Bei bekannten Verfahren werden üblicherweise nur Energieströme gemessen und dokumentiert und Regelkreise zur Optimierung von wirtschaftlichen Kriterien betrieben. Bei dem erfindungsgemäßen Verfahren können auch interne und externe Kriterien in einem Rechenwerk (Algorithmen) mit einem Zeitstempel versehen und bewertet werden.

Eine Datenablage mit einem Zeitstempel ermöglicht eine direkte Zuordnung des CO2-Verbrauchs zu hergestellten Produkten. Hierdurch kann eine direkte CO2-Relevanz als Nachweis und Dokumentation von Produkten ermöglicht werden. Eine Validierung kann in einer letzten Stufe ein Ranking der Produkte ermöglichen, wobei die Produkte mit Chargennummern in Übereinstimmung gebracht werden können.

Auf Basis des erfindungsgemäßen Verfahrens und der dort erfassten Daten kann ein zeit- und umständeabhängiger CO2-minimierter Betrieb ermöglicht werden. Dabei können unterschiedliche Ausgänge beaufschlagt werden um verschiedene Betriebseinheiten und Anlagenteile unterschiedlich zu regeln, da deren Eigenschaften möglicherweise gegenläufig sind. Es kann somit eine Kompensationsregelung erreicht werden. Dabei werden zu den Ausgangsgrößen die Ergebnisse mit einem Zeitstempel versehen, so dass ein Nachweis in der Gesamtbetrachtung möglich ist. Ein Regelwerk auf Basis des erfindungsgemäßen Verfahrens kann wie eine Simulationsrechnung funktionieren, die vorausschauend Ergebnisse bilanziert und darauf abgestimmt bestimmte Betriebseinheiten oder Anlagenteile hinsichtlich deren CO2-Bilanz minimiert, neu ausregelt und/oder steuert.

Ein Produktionsprozess besteht üblicherweise aus einer oder mehreren Wertschöpfungsstufen, welche sich als Wertschöpfungskette abbilden lassen. Diese Wertschöpfungsstufen sind auf den Einsatz von Roh-, Hilfs- und Betriebsstoffen angewiesen. Entlang des Transformationsprozesses für die Produktion wird zudem der Einsatz von Energie benötigt.

Kennzeichnend für derartige Transformationsprozesse und den Energieeinsatz ist, dass jeder Prozessabschnitt in der Regel in sich Emissionen verursacht. Die Emissionsbilanz ist wie die Energiebilanz von Transformationsprozessen ein wesentlicher Kosten- und Ertragsfaktor. Sind Waren- und Personaleinsätze in Transformationsprozessen anhand ihrer Mengen-zu-Kosten-Relation einfach determinierbar, so ist dies für Emissionen weitaus komplexer.

Gegenwärtig wird zur Erfassung von Emissionen vielfach die Multiplikation eines Emissions-Koeffizienten mit dem Mitteleinsatz in Form von Roh-, Hilfs- und Betriebsstoffen herangezogen. Dieses Verfahren gibt jedoch nur unzureichend eine Aussage darüber, welche Emissionen tatsächlich entlang des Transformationsprozesses erzeugt wurden.

Das erfindungsgemäße Verfahren betrifft hingegen ein technisches Verfahren, welches sowohl den Mitteleinsatz als auch den spezifischen Ablauf des Transformationsprozesses berücksichtigen kann.

Wertschöpfungsstufen werden üblicherweise mittels eines Datensystems erhoben, wobei auch eine Übernahme von Betriebsabläufen aus Drittsystem herangezogen werden kann. Wertschöpfungsstufen beschreiben in sich folgende Parameter:
- Mitteileinsatz nach definierter Menge von Roh-, Hilfs- und Betriebsstoffen im zeitlichen Verlauf,
- Mittelausprägung entlang den einzelnen Wertschöpfungsstufen,
- Messtechnische Erfassung des Energieeinsatzes und
- Gekoppelte Emissionskoeffizienten zu der jeweiligen Wertschöpfungsstufe und deren Emissionsausgabe.

Sind die Eingangsparameter aus den Wertschöpfungsstufen bekannt, so leitet sich daraus eine annäherungsweise mathematische Funktion zur Beschreibung der Emissionsausgabe ab. Da ein Produktionsprozess aus einer oder mehreren Wertschöpfungsstufen besteht, kann die Summe dieser Emissionen entlang den Stufen als Gesamtausgabe der Emissionen herangezogen werden.

Einzelne Wertschöpfungsstufen des Produktionsprozesses lassen sich hinsichtlich ihrer spezifischen Emissionen "benchmarken" und eigenen sich unter Aspekten der Kosten- und Emissionsminimierung möglicherweise zur Substitution durch eine andere Betriebsweise der spezifischen Wertschöpfungsstufe. Zusätzlich kann auch der Mitteleinsatz von Roh-, Hilfs- und Betriebsstoffen angepasst werden.

Mögliche Kombinationen des gegenwärtig vorliegenden Produktionsprozesses und Alternativen zur Substitution, Betriebsweise und Mitteleinsatz lassen sich wiederrum als eine mathematische Funktion beschreiben, deren Zielsetzung die Emissionsreduktion ist. Diese Funktion kann in Regelkreise Eingang finden, wie sie eingehend zur Steuerung des Produktionsprozesses herangezogen werden.

Im Hinblick auf einen Vergleichsalgorithmus und eine Simulation kann ein Regler oder eine Steuereinrichtung gemäß dem erfindungsgemäßen Verfahren eine bestehende Prozesskette mit einer Prozesskette einer idealisierten Fertigungsweise vergleichen. Bei einer solchen Prozesskette verhält es sich wie in der Energietechnik: eine reale Energieanlage wäre beispielsweise dann ideal, wenn 100% Primärenergie in 100% Strom umgewandelt werden. Da eine solche Anlage aus physikalischen Gründen in der Realität nicht existieren kann, wird ein Vergleichsgesetz herangezogen, wobei es im Energiebereich beispielsweise der Carnotprozess sein kann. Wer möglichst nahe an der physikalischen/technischen Machbarkeit liegt, erfüllt den höchsten Standard.

Ein Regler oder eine Steuereinrichtung gemäß dem erfindungsgemäßen Verfahren kann möglicherweise nicht die Möglichkeit einer Änderung eines bestehenden Fertigungsprozesses ersetzen, sondern kann gegebenenfalls nur aufzeigen, wo die höchsten CO2-Belastungen entstehen. Dadurch wird es allerdings möglich, gezielt auf Umstände zu reagieren, die diese höchsten CO2-Belastungen verursachen, und in der Folge Herstellungsabläufe im laufenden Prozess der Betriebseinheiten zu optimieren. Es können aber auch sekundäre Effekte dargestellt werden, die nicht im unmittelbaren Prozessablauf der Betriebseinheiten wirken.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf diese Ausführungsbeispiele einschränken.

## Patentansprüche

1. Verfahren zum Betreiben von Betriebseinheiten, insbesondere in industriellen Prozessen,
wobei mindestens eine Betriebseinheit zum Erreichen eines definierbaren Betriebs- oder Produktionsziels mittels einer Steuereinrichtung gesteuert wird,
wobei ein oder mehrere für das Betreiben der mindestens einen Betriebseinheit relevante Parameter in einer Funktionseinheit gemessen und/oder erfasst und/oder hinterlegt wird oder werden und
wobei die CO2-Relevanz des Parameters oder der Parameter und/oder die durch den oder die Parameter während des Betriebs der mindestens einen Betriebseinheit verursachte CO2-Emission mittels einer mit der Funktionseinheit zusammenwirkenden Ausgabeeinrichtung angezeigt oder ausgegeben wird oder werden.

2. Verfahren nach Anspruch 1, **dadurch gekennzeichnet, dass** der oder die Parameter in Echtzeit gemessen und/oder erfasst und/oder hinterlegt wird oder werden.

3. Verfahren nach Anspruch 1 oder 2, **dadurch gekennzeichnet, dass** die CO2-Relevanz und/oder die CO2-Emission in Echtzeit angezeigt oder ausgegeben wird.

4. Verfahren nach einem der Ansprüche 1 bis 3, **dadurch gekennzeichnet, dass** die Funktionseinheit der Steuereinrichtung zugeordnet, in die Steuereinrichtung integriert oder durch die Steuereinrichtung gebildet ist.

5. Verfahren nach einem der Ansprüche 1 bis 4, **dadurch gekennzeichnet, dass** die Ausgabeeinrichtung der Funktionseinheit zugeordnet, in die Funktionseinheit integriert oder durch die Funktionseinheit gebildet ist.

6. Verfahren nach einem der Ansprüche 1 bis 5, **dadurch gekennzeichnet, dass** der oder die Parameter unter den folgenden Parametern ausgewählt ist oder sind: elektrischer Strom, Brennstoff oder Brennstoffe, Wasser, Abwasser, Rohstoff oder Rohstoffe, Halbzeug oder Halbzeuge, Fertigprodukt oder Fertigprodukte, Hilfsprodukt oder Hilfsprodukte, Transport oder Infrastruktur.

7. Verfahren nach einem der Ansprüche 1 bis 6, **dadurch gekennzeichnet, dass** ein Hinterlegen der CO2-Relevanz eines Parameters in der Funktionseinheit auf der Basis einer Information aus einer internen oder externen Datenbank und/oder von Drittsystemen erfolgt.

8. Verfahren nach einem der Ansprüche 1 bis 7, **dadurch gekennzeichnet, dass** eine Regelung und/oder Steuerung der mindestens einen Betriebseinheit oder von Aggregaten und/oder Anlagen der mindestens einen Betriebseinheit unter Berücksichtigung der CO2-Relevanz des Parameters oder der Parameter erfolgt.

9. Verfahren nach Anspruch 8, **dadurch gekennzeichnet, dass** die Regelung und/oder Steuerung im Hinblick auf eine Optimierung der Auswahl des Parameters oder der Parameter bezüglich deren jeweiliger CO2-Relevanz erfolgt.

10. Verfahren nach einem der Ansprüche 1 bis 9, **dadurch gekennzeichnet, dass** eine Regelung und/oder Steuerung der mindestens einen Betriebseinheit oder von Aggregaten und/oder Anlagen der mindestens einen Betriebseinheit unter Berücksichtigung der durch den oder die Parameter während des Betriebs der mindestens einen Betriebseinheit verursachten CO2-Emission erfolgt.

11. Verfahren nach Anspruch 10, **dadurch gekennzeichnet, dass** die Regelung und/oder Steuerung im Hinblick auf eine Optimierung oder Minimierung der durch den oder die Parameter während des Betriebs der mindestens einen Betriebseinheit verursachten CO2-Emission erfolgt.

12. Verfahren nach einem der Ansprüche 1 bis 11, **dadurch gekennzeichnet, dass** mindestens eine technische und/oder kaufmännische Optimierungsmöglichkeit für den Betrieb und/oder eine Regelung und/oder Steuerung der mindestens einen Betriebseinheit oder von Aggregaten und/oder Anlagen der mindestens einen Betriebseinheit auf Basis der hinsichtlich des Parameters oder der Parameter angezeigten oder ausgegebenen CO2-Relevanz und/oder CO2-Emission angezeigt und vorzugsweise als Basis für eine Optimierung des Betriebs und/oder der Regelung und/oder Steuerung verwendet wird.

13. Vorrichtung zur Durchführung des Verfahrens zum Betreiben von Betriebseinheiten nach einem der Ansprüche 1 bis 12.

14. Computerprogrammprodukt mit Programmabschnitten zur Durchführung des Verfahrens zum Betreiben von Betriebseinheiten nach einem der Ansprüche 1 bis 12.
